# EUROPEAN PATENT APPLICATION

(11) **EP 3 168 077 A1**
(43) Date of publication of application: **17.05.2017**
(21) Application number: 14792997.0
(22) Date of filing: 03.07.2014
(51) Int. Cl.: B60K 20/00, B60R 16/02

(54) **VEHICLE CABLE CONNECTING DEVICE**

(71) Applicant: Infac Corporation, Gyeonggi-do 425-851 (KR)
(72) Inventor: JEONG, Mi Yoon, Cheonan-si Chungcheongnam-do 331-290 (KR)
(74) Representative: Stöckeler, Ferdinand
(86) International application number: PCT/KR2014/005971
(87) International publication number: WO 2016/002989

(57) **Abstract**

Disclosed herein is a cable connection apparatus for vehicles which connects a cable of an operation mechanism to a connection member of a mechanism to be operated in vehicles. The cable connection apparatus includes a connector coupled to the connection member of the mechanism to be operated, an end shaft coupled to the cable of the operation mechanism and provided at the connector to be movable relative thereto, and a locker movably provided at one side of the connector in a direction across the end shaft to support and fix the end shaft. Consequently, the cable of the operation mechanism may be connected to the connection member of the mechanism to be operated in a length adjustable manner in the vehicles, thereby allowing cables having various lengths to be connected to the connection member.

## Description

### TECHNICAL FIELD

The present invention relates to a cable connection apparatus for vehicles, and more particularly, to a cable connection apparatus for vehicles which connects a cable of an operation mechanism such as a shift lever to a connection member of a mechanism to be operated such as a transmission in vehicles.

### BACKGROUND ART

In general, in apparatuses, such manual transmissions or brakes of vehicles, actuated through levers operated by a driver, cables for transferring operation force of the levers to the apparatuses are used.

For example, in a vehicle equipped with a manual transmission, a shift cable for transferring operation force of a shift lever to the manual transmission is used. One end of the shift cable is connected to the shift lever and the other end thereof is connected to a control lever of the manual transmission so that operation force when a driver operates the shift lever is transferred to the control lever through the shift cable, thereby allowing gears to be shifted.

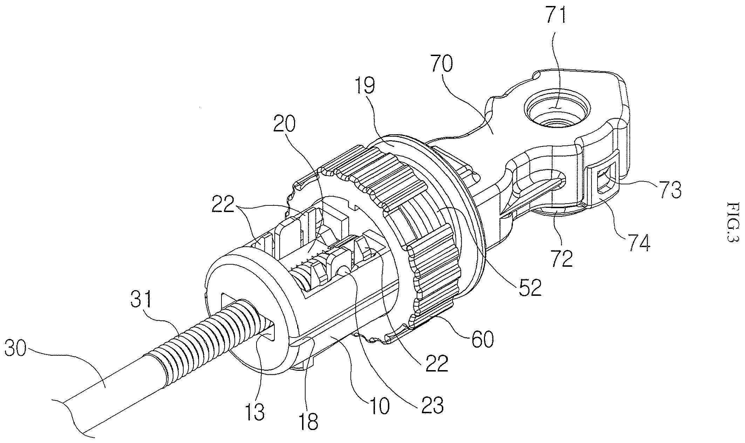

Korean Patent Laid-Open Publication No. 2009-0082038 (prior literature) discloses a connection member of a shift cable. As shown in Fig. 3 of the prior literature, the disclosed connection member of a shift cable is configured such that an end shaft 10 connected to a cable is inserted and fixedly coupled to one end of a connection body 20. That is, the end shaft 10 is fixedly coupled to the connection body 20 so as not to be movable relative thereto.

Accordingly, a cable at a shift lever may not be coupled to the connection body 20 in a length adjustable manner. For this reason, it is difficult to adopt cables having various lengths.

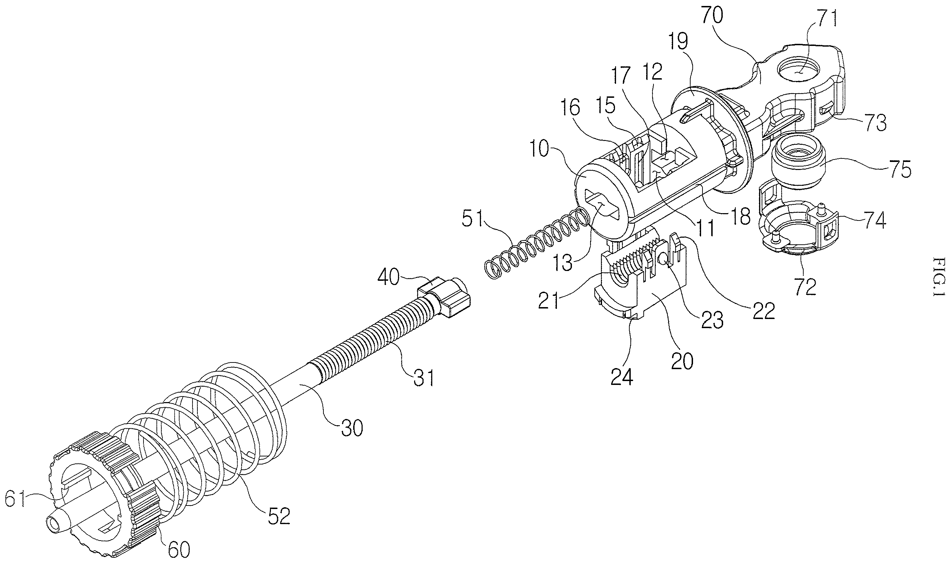

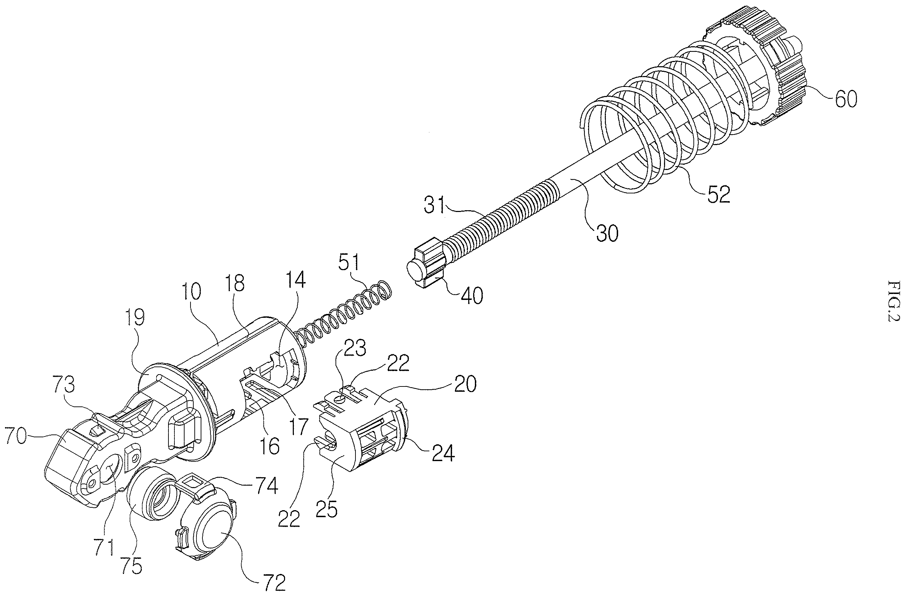

In addition, when both sides of an end eye are symmetrically formed as shown in Figs. 1 and 2 in the present invention, it is apprehended that a connection member at a transmission is inversely assembled to a coupling hole of the end eye.

### DISCLOSURE

### TECHNICAL PROBLEM

Accordingly, the present invention has been made in view of the above-mentioned problem, and an object thereof is to provide a cable connection apparatus for vehicles capable of connecting a cable of an operation mechanism to a connection member of a mechanism to be operated in a length adjustable manner in vehicles, thereby allowing cables having various lengths to be easily connected to the connection member.

### TECHNICAL SOLUTION

In accordance with an aspect of the present invention, a cable connection apparatus for vehicles, which connects a cable of an operation mechanism to a connection member of a mechanism to be operated in vehicles, includes a connector coupled to the connection member of the mechanism to be operated, an end shaft coupled to the cable of the operation mechanism and provided at the connector to be movable relative thereto, and a locker movably provided at one side of the connector in a direction across the end shaft to support and fix the end shaft.

The cable connection apparatus for vehicles may further include a locking portion provided at one side of the locker to support a bite portion, and the bite portion provided at one side of the end shaft to engage with the locking portion.

At least one of the locking portion and the bite portion may be continuously formed in a threaded shape in a longitudinal direction of the end shaft.

The locking portion may have a semicircular sectional shape.

The locker may be detachably coupled to one side of the connector by a locker coupling unit.

The locker coupling unit may include a first hook provided at one side of the locker in an elastically deformable manner, and a first catching projection provided at one side of the connector to support the first hook.

One side of the connector may be formed with a stationary groove receiving the first hook at a position in which the locking portion is spaced apart from the bite portion so as to stop the locker.

The locker coupling unit may further include a second hook provided at one side of the locker, and a second catching projection provided at one side of the connector to restrain the second hook such that the locker does not retreat in a state in which the first hook is located at the stationary groove.

The cable connection apparatus for vehicles may further include a stopper provided at a tip of the end shaft and supported by the locker such that the end shaft is not decoupled from the connector when the locker is located at the stationary groove.

The cable connection apparatus for vehicles may further include a first elastic member elastically supporting the stopper with respect to the connector.

The cable connection apparatus for vehicles may further include a clip provided outside the connector to be movable relative thereto and supporting the locker such that the locker is not decoupled from the connector.

The clip may be provided at one side of the connector so as to be slidable in a movement direction of the end shaft.

The cable connection apparatus for vehicles may further include a second elastic member elastically supporting the clip with respect to the connector.

The cable connection apparatus for vehicles may further include an end eye integrally formed at one side of the connector and having a coupling hole to which the connection member of the mechanism to be operated is fitted, and a cover provided at one side of the end eye to cover one side of the coupling hole.

### ADVANTAGEOUS EFFECTS

In accordance with a cable connection apparatus for vehicles of the present invention, a cable of an operation mechanism may be connected to a connection member of a mechanism to be operated in a length adjustable manner in vehicles, thereby allowing cables having various lengths to be connected to the connection member. Consequently, fastening force between the cable and the connection member may be increased.

In addition, the present invention may prevent the connection member of the mechanism to be operated from being inversely assembled to an end eye.

Additional advantages, objects, and features of the invention will be set forth in part in the description which follows and in part will become apparent to those having ordinary skill in the art upon examination of the following or may be learned from practice of the invention.

### BRIEF DESCRIPTION OF DRAWINGS

The above and other objects, features and other advantages of the present invention will be more clearly understood from the following detailed description taken in conjunction with the accompanying drawings, in which:
Figs. 1 and 2 are exploded perspective views illustrating a cable connection apparatus for vehicles according to an embodiment of the present invention;
Figs. 3 and 4 are coupled perspective views of the cable connection apparatus for vehicles shown in Figs. 1 and 2;
Fig. 5 is a side view of the Fig. 3.
Fig. 6 is a cross-sectional view taken along line A-A of Fig. 5;
Fig. 7 is a cross-sectional view taken along line B-B of Fig. 5;
Fig. 8 is a cross-sectional view taken along line C-C of Fig. 7;
Fig. 9 is a view illustrating an operation state in Fig. 8; and
Fig. 10 is a cross-sectional view taken along line D-D of Fig. 7.

### BEST MODE FOR INVENTION

Reference will now be made in detail to embodiments of the present invention, examples of which are illustrated in the accompanying drawings.

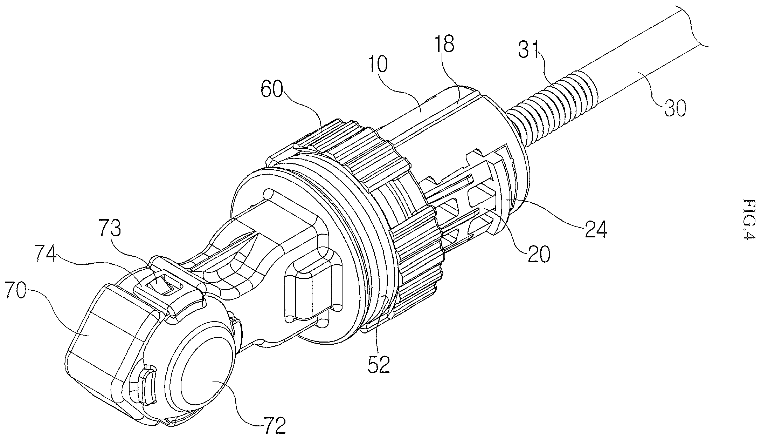

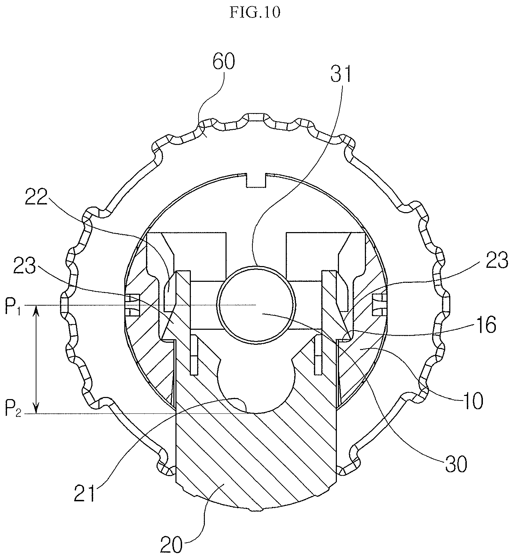

Referring to Figs. 1 to 10, a cable connection apparatus for vehicles according to an embodiment of the present invention includes a connector 10 coupled to a connection member 1 of a mechanism to be operated, an end shaft 30 provided at the connector 10 to be movable relative thereto, a first elastic member 51 which elastically supports the end shaft 30 with respect to the connector 10, a locker 20 which supports and fixes the end shaft 30, a clip 60 which supports the locker 20 such that the locker 20 is not decoupled from the connector 10, and a second elastic member 52 which elastically supports the clip 60 with respect to the connector 10.

The connector 10 has a locking space portion 11 which receives one end of the end shaft 30 and the locker 20 at one side thereof. One side of the locking space portion 11 is formed with a stopper receiving groove 12 which slidably receives a stopper 40 provided at a tip of the end shaft 30.

One side of the connector 10 is formed with an end shaft port 13 through which the end shaft 30 enters or exits the locking space portion 11, and the connector 10 has a locker port 14 formed at a position perpendicular to the end shaft port 13. Accordingly, the tip of the end shaft 30 is inserted into the locking space portion 11 through the end shaft port 13 and the locker 20 is inserted into the locking space portion 11 through the locker port 14 in a direction across the end shaft 30.

The locker 20 is movably provided in the locking space portion 11 of the connector 10 in the direction across the end shaft 30, thereby fixing the end shaft 30.

One side of the locker 20 is provided with a locking portion 21 and one side of the end shaft 30 is provided with a bite portion 31.

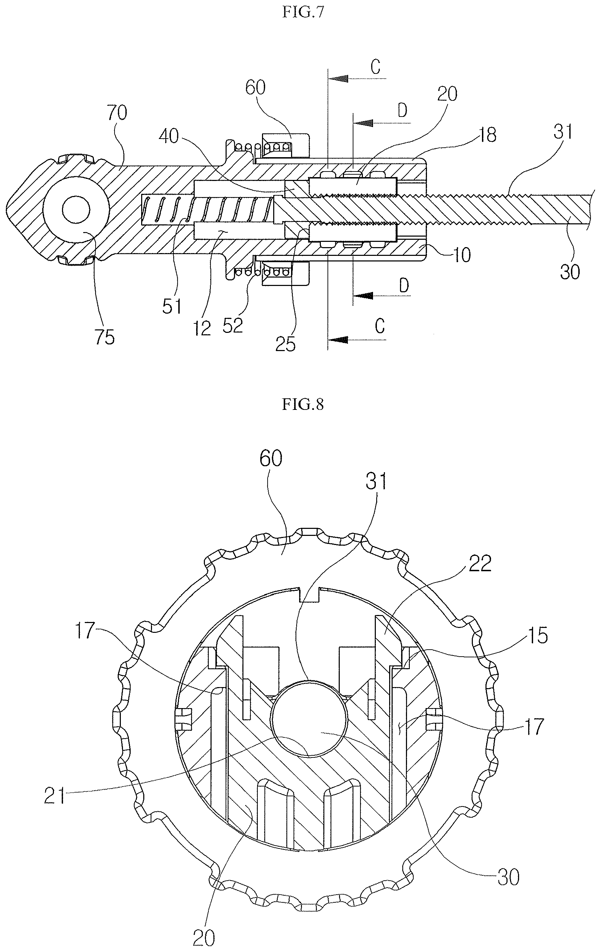

The bite portion 31 is continuously formed in a threaded shape on an outer peripheral surface of the end shaft 30 in a longitudinal direction thereof. The locking portion 21 is continuously formed in a threaded shape having the same pitch as the bite portion 31. Accordingly, as shown in Fig. 8, the locker 20 fixes the end shaft 30 while the threaded locking portion 21 engages with the threaded bite portion 31.

Here, since the bite portion 31 is continuously formed in the longitudinal direction of the end shaft 30, the locking portion 21 may engage with the bite portion 31 when the end shaft 30 is moved within a distance over which the bite portion 31 is formed on the end shaft 30. Accordingly, by moving the end shaft 30 relative to the connector 10 according to a length of a cable coupled to the end shaft 30, the cable may be connected to the connection member in a tensile manner.

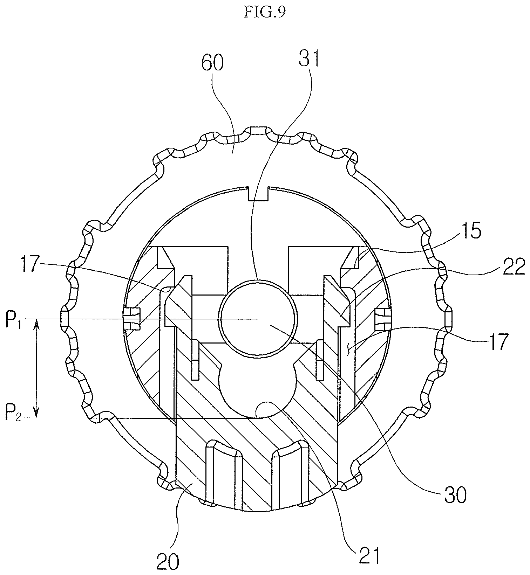

Referring to Fig. 9, when the locking portion 21 is decoupled from the bite portion 31 by separating the locker 20 from the end shaft 30, the end shaft 30 may be moved. When the end shaft 30 is moved and then the locker 20 is again seated to the end shaft 30, the locking portion 21 engages with the bite portion 31 so that the end shaft 30 is fixed by the locker 20.

Meanwhile, the locking portion 21 is formed in a semicircular shape having the same diameter as the outer peripheral surface of the end shaft 30 or bite portion 31. Accordingly, as shown in Fig. 8, the locking portion 21 is seated while coming into contact over a semicircle on the bite portion 31, and thus support force of the locking portion 21 to the bite portion 31 is maximized.

The locker 20 is detachably coupled to one side of the connector 10 by a locker coupling unit.

The locker coupling unit includes a first hook 22 and second hook 23 provided at one side of the locker 20, and a first catching projection 15 and second catching projection 16 provided at one side of the connector 10.

The first hook 22 is formed in a cantilever shape at one side of the locker 20 so as to extend in an elastically deformable manner, and is seated to the first catching projection 15 to fixedly couple the locker 20 to the connector 10. The locker 20 is inserted into the locking space portion 11 through the locker port 14 to be slidably coupled to the locking space portion 11. When the locker 20 moves until the locking portion 21 engages with the bite portion 31, the first hook 22 is caught by the first catching projection 15, thereby allowing the locker 20 to be fixedly coupled to the connector 10.

When the cable and the end shaft 30 are assembled to the connector 10, the first hook 22 is seated to the first catching projection 15 by first positioning the end shaft 30 with respect to the connector 10 in a state in which the locking portion 21 is spaced apart from the bite portion 31 and then moving the locker 20 toward the end shaft 30.

The first hook 22 is seated to the first catching projection 15 while being elastically deformed. In this state, when the first hook 22 is opened and decoupled from the first catching projection 15, the locker 20 may be separated from the connector 10. This method has an advantage of easily separating the locker 20 from the connector 10, but coupling between the first hook 22 and the first catching projection 15 may be released, for example, due to external force such as vibration or impact applied to a vehicle. Therefore, the clip 60 is fitted onto the locker 20 such that the locker 20 is not separated from the connector 10 even when the first hook 22 is decoupled from the first catching projection 15.

The clip 60 has a ring shape and is fitted onto the connector 10 so as to be movable relative thereto. The clip 60 is fitted onto the connector 10 in a state in which the locker 20 is fitted to the locking space portion 11 of the connector 10, thereby being located outside the locker 20.

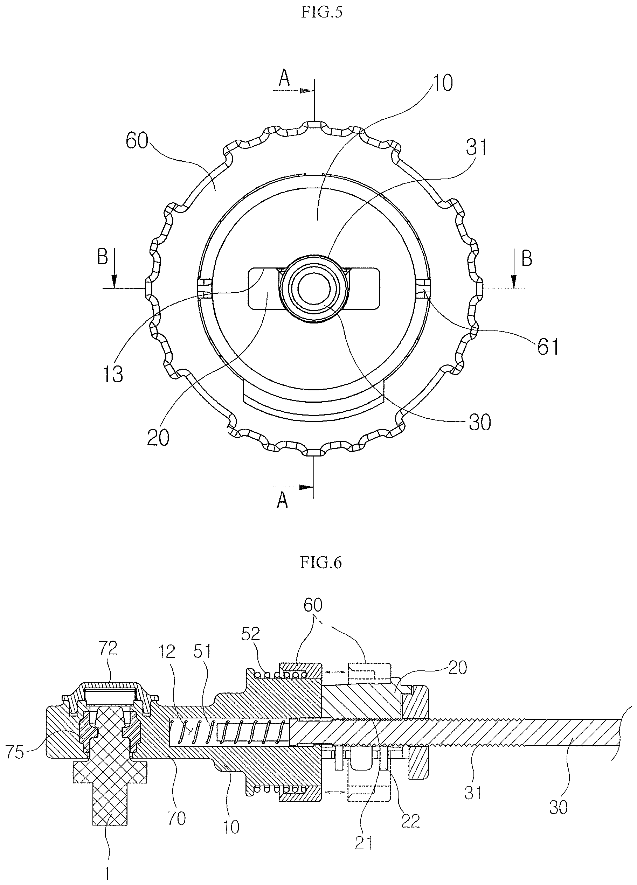

As shown in Fig. 6, the clip 60 is provided at one side of the connector 10 so as to be slidable in a movement direction of the end shaft 30. A guide groove 18 is formed on the connector 10 in the movement direction of the end shaft 30 and a guide protrusion 61 is formed on an inner wall of the clip 60. In a state in which the guide protrusion 61 is fitted to the guide groove 18, the clip 60 may slide along the guide groove 18.

A clip support portion 24 is formed at one side of the locker 20 such that the clip 60 is not separated from the locker 20. A limit portion 19 is formed at one side of the connector 10. The second elastic member 52 is provided between the clip 60 and the limit portion 19.

The second elastic member 52 elastically supports the clip 60 with respect to the limit portion 19, thereby allowing the clip 60 to remain outside the locker 20. That is, as shown in Fig. 6, the second elastic member 52 generates restoring force of pushing the clip 60 toward the locker 20 by an elastic spring and at the same time the clip 60 is supported by the clip support portion 24 so that the clip 60 is located outside the locker 20. As a result, the locker 20 is restrained by the clip 60 so as not to be separated from the connector 10. The clip 60 fixedly couples the locker 20 in a dual manner together with the first hook 22 and the first catching projection 15.

The stopper 40 is provided at the tip of the end shaft 30.

The stopper 40 is caught and supported by the locker 20 such that the end shaft 30 is not separated from the connector 10 in a temporary assembly state. The cable connection apparatus for vehicles according to the present invention should be manufactured independently of a mechanism to be operated (for instance, a transmission) and an operation mechanism (for instance, a shift lever) and then transported to an assembly line of the vehicle. To this end, in the present invention, a product is shipped in a state in which one end of the end shaft 30 is inserted into the connector 10.

In this case, since the end shaft 30 is in danger of being damaged when it moves in the connector 10, the end shaft 30 has to be fixed. However, when the end shaft 30 is fixedly supported by pressing the locker 20 against the end shaft 30, the first hook 22 is seated to the first catching projection 15. Therefore, an operator may not adjust the length of the cable by moving the end shaft 30 unless the operator decouples the first hook 22 from the first catching projection 15 when assembling the mechanism to be operated to the operation mechanism in the future.

Accordingly, the stopper 40 is caught by one side of the locker 20 in a state in which the locker 20 is not pressed against the end shaft 30, namely, in a state in which the locking portion 21 is spaced apart from the bite portion 31, thereby restraining separation of the end shaft 30.

The stopper 40 is inserted into the stopper receiving groove 12 of the connector 10. As shown in Fig, 7, the stopper 40 is slidably inserted into the stopper receiving groove 12 to be moved together with the end shaft 30. Since the stopper 40 is also moved together with the end shaft 30 in proportion to a distance by which the end shaft 30 is moved, the end shaft 30 has a stroke determined according to a depth of the stopper receiving groove 12.

However, since the stopper receiving groove 12 has an elongated shape, the end shaft 30 is moved by external force unless the locker 20 supports the end shaft 30 in a state in which the stopper 40 is merely inserted into the stopper receiving groove 12. Thus, the stopper 40 and the end shaft 30 are pressed against a catching surface 25 of the locker 20 by the first elastic member 51 so as to be fixed. The locker 20 has the catching surface 25 formed at a position perpendicular to the locking portion 21. The first elastic member 51 is inserted into the stopper receiving groove 12 and pushes the stopper 40 and the end shaft 30 toward the locker 20 so as to press the stopper 40 against the catching surface 25 of the locker 20. As a result, the stopper 40 and the end shaft 30 are not moved.

Here, the locker 20 stops at a position in which the locking portion 21 is spaced apart from the bite portion 31 while the stopper 40 is pressed against the catching surface 25. In such a temporary assembly state, in order for the locker 20 to stop at an intermediate stationary position P₂ instead of at a position (a coupled position) P₁ in which the first hook 22 is seated to the first catching projection 15, a stationary groove 17 is formed at one side of the connector 10 (see Figs. 8 to 10).

The stationary groove 17 receives the first hook 22 at the stationary position P₂ in which the locking portion 21 is spaced apart from the bite portion 31 so as to stop the locker 20. When the first hook 22 reaches the stationary groove 17 in the process of inserting the locker 20 into the locking space portion 11 by applying external force during temporary assembly, the external force is removed without further pushing the locker 20. When the locker 20 is located at the stationary groove 17, the stopper 40 is supported by the locker 20 such that the end shaft 30 is not decoupled from the connector 10. In this case, as shown in Fig. 6, when the second elastic member 52 is contracted so that the clip 60 is located in a state of being decoupled from the upper side of the locker 20 and the locker 20 is moved to the coupled position P₁, the clip 60 is moved upward of the locker 20 while the second elastic member 52 is restored.

The second hook 23 is provided at one side of the locker 20 and the second catching projection 16 is provided at one side of the connector 10. The second catching projection 16 is formed at the side of the stationary groove 17 and the second hook 23 is formed at the side of the first hook 22.

When the first hook 22 is located at the stationary groove 17, namely, when the locker 20 stops at the stationary position, the second hook 23 is seated to the second catching projection 16 to restrain the locker 20 from retreating. The stationary groove 17 restrains the first hook 22 from moving toward the first catching projection 15, whereas the second catching projection 16 restrains the second hook 23 from retreating in a direction opposite to the first catching projection 15.

One side of the connector 10 is provided with an end eye 70 coupled to the connection member 1 of the mechanism to be operated.

The end eye 70 is formed integrally with the connector 10 and has a coupling hole 71 to which the connection member 1 of the mechanism to be operated is fitted. A cover 72 is detachably coupled to one side of the end eye 70.

The cover 72 is coupled to one side of the end eye 70 to cover one side of the coupling hole 71. Thereby, the connection member 1 of the mechanism to be operated is inserted into the other side of the coupling hole 71 which is not covered by the cover 72. Thus, when the connection member 1 of the mechanism to be operated is fastened to the coupling hole 71 of the end eye 70, it may be possible to prevent the connection member 1 of the mechanism to be operated from being erroneously assembled from an opposite side of the coupling hole.

One side of the end eye 70 is provided with a coupling protrusion 73 and one side of the cover 72 is provided with a coupling projection 74. The cover 72 is detachably coupled to the end eye 70 by fitting the coupling projection 74 to the coupling protrusion 73.

The coupling hole 71 is provided therein with a damper 75 which bites the connection member 1 of the mechanism to be operated and is formed integrally with the end eye 70 by insert injection molding.

Various embodiments have been described in the best mode for carrying out the invention. Although the present invention has been described with respect to the illustrative embodiments, it will be apparent to those skilled in the art that various variations and modifications may be made without departing from the spirit and scope of the invention as defined in the following claims.

It is to be understood that differences relevant to the variations and modifications fall within the spirit and scope of the present invention defined in the appended claims.

## Claims

1. A cable connection apparatus for vehicles which connects a cable of an operation mechanism to a connection member of a mechanism to be operated in vehicles, comprising:
a connector coupled to the connection member of the mechanism to be operated;
an end shaft coupled to the cable of the operation mechanism and provided at the connector to be movable relative thereto; and
a locker movably provided at one side of the connector in a direction across the end shaft to support and fix the end shaft.

2. The cable connection apparatus for vehicles according to claim 1, further comprising:
a locking portion provided at one side of the locker to support a bite portion; and
the bite portion provided at one side of the end shaft to engage with the locking portion.

3. The cable connection apparatus for vehicles according to claim 2, wherein at least one of the locking portion and the bite portion is continuously formed in a threaded shape in a longitudinal direction of the end shaft.

4. The cable connection apparatus for vehicles according to claim 3, wherein the locking portion has a semicircular sectional shape.

5. The cable connection apparatus for vehicles according to claim 2, wherein the locker is detachably coupled to one side of the connector by a locker coupling unit.

6. The cable connection apparatus for vehicles according to claim 5, wherein the locker coupling unit comprises:
a first hook provided at one side of the locker in an elastically deformable manner; and
a first catching projection provided at one side of the connector to support the first hook.

7. The cable connection apparatus for vehicles according to claim 6, wherein one side of the connector is formed with a stationary groove receiving the first hook at a position in which the locking portion is spaced apart from the bite portion so as to stop the locker.

8. The cable connection apparatus for vehicles according to claim 7, wherein the locker coupling unit further comprises:
a second hook provided at one side of the locker; and
a second catching projection provided at one side of the connector to restrain the second hook such that the locker does not retreat in a state in which the first hook is located at the stationary groove.

9. The cable connection apparatus for vehicles according to claim 8, further comprising a stopper provided at a tip of the end shaft and supported by the locker such that the end shaft is not decoupled from the connector when the locker is located at the stationary groove.

10. The cable connection apparatus for vehicles according to claim 9, further comprising a first elastic member elastically supporting the stopper with respect to the connector.

11. The cable connection apparatus for vehicles according to claim 6, further comprising a clip provided outside the connector to be movable relative thereto and supporting the locker such that the locker is not decoupled from the connector.

12. The cable connection apparatus for vehicles according to claim 11, wherein the clip is provided at one side of the connector so as to be slidable in a movement direction of the end shaft.

13. The cable connection apparatus for vehicles according to claim 12, further comprising a second elastic member elastically supporting the clip with respect to the connector.

14. The cable connection apparatus for vehicles according to claim 1, further comprising:
an end eye integrally formed at one side of the connector and having a coupling hole to which the connection member of the mechanism to be operated is fitted; and
a cover provided at one side of the end eye to cover one side of the coupling hole.
